# FASCICULE DE BREVET EUROPEEN

(11) **EP 0 722 848 B1**
(45) Date de publication et mention de la délivrance du brevet: **03.03.1999**
(21) Numéro de dépôt: 95402941.9
(22) Date de dépôt: 26.12.1995
(51) Int. Cl.: B60B 33/02

(54) **Roulette pivotante à blocage directionnel protégé**
Lenkrolle mit geschützter Richtungsverriegelung
Wheel castor with protected locking of steering

(30) Priorité: 20.01.1995 FR 9500631
(43) Date de publication de la demande: 24.07.1996
(73) Titulaire: GUITEL-ETIENNE MOBILOR, F-93310 Le Pré Saint-Gervais (FR)
(72) Inventeur: Hrabina, Jean, F-93600 Aulnay sous Bois (FR); Casse, Rodolph, F-77340 Pontault Combault (FR)
(74) Mandataire: Le Bras, Hervé

(56) Documents cités:
- EP-A- 0 352 380
- EP-A- 0 372 855
- DE-U- 9 317 256
- FR-A- 2 703 300
- US-A- 4 494 272

## Description

La présente invention concerne une roulette pivotante à blocage directionnel comportant une roue pivotable autour d'un axe de pivotement vertical sensiblement orthogonal à l'axe de rotation de la roue et décalé par rapport à ce dernier, un palier de support présentant au moins une cuvette annulaire renversée qui, par sa partie centrale, est fixée sur l'extrémité inférieure dudit axe de pivotement, une chape de support présentant au moins une joue latérale dont l'extrémité inférieure porte ladite roue et présentant également une jupe disposée autour de l'extrémité inférieure de l'axe de pivotement, ladite jupe étant raccordée à l'extrémité supérieure de ladite joue et coopérant avec les organes de roulement dudit palier, une lame à ressort disposée dans l'espace compris entre le palier de support et la bande de roulement de la roue et articulée par sa partie médiane sur la chape, ladite lame à ressort comportant une première extrémité en appui sur la jupe et une deuxième extrémité comportant un verrou de blocage en appui coulissant sur le bord inférieur de la cuvette et susceptible de s'engager dans une dépression prévue sur ledit bord inférieur.

Une telle roulette pivotante est décrite dans la demande de brevet français publiée sous le numéro FR-A-2 703 300. Ce document montre dans les figures 4E et 7 un verrou de blocage sous forme d'un rouleau pouvant rouler sur le bord inférieur d'une cuvette solidaire de l'axe de pivotement. L'axe du rouleau est porté par deux plaques de support verticales disposées au-dessus de l'extrémité de la lame à ressort. Il s'ensuit que des saletés peuvent se loger dans l'espace délimité par les plaques de support, la lame à ressort et le rouleau, ce qui entraîne une usure prématurée du rouleau ou un coincement du rouleau empêchant le pivotement libre de la roulette dans la position de déblocage du verrou. D'autre part, il n'y est pas prévu de moyens pour protéger le rouleau contre les chocs.

Le but de la présente invention est de pallier ces inconvénients.

L'invention atteint son but par le fait que le verrou de blocage comporte un galet monté à rotation libre autour d'un axe de galet, par le fait que ledit axe de galet est fixé sur une extrémité cambrée de la lame à ressort et par le fait qu'il est prévu des moyens de protection dudit galet contre les chocs latéraux.

Grâce à cette disposition, le galet est disposé dans un plan sensiblement parallèle à l'extrémité cambrée de la lame à ressort. L'espace situé sous le galet est totalement dégagé, ce qui supprime l'incrustation de saleté dans cette zone. D'autre part, la cambrure de l'extrémité de la lame à ressort permet un bon contact du galet de blocage avec le bord inférieur de la cuvette.

La protection du galet de blocage peut être assurée par un cache fixé à l'extrémité libre de l'axe de galet, soit par rivetage, soudage, encliquetage. Elle peut également être assurée par deux rabats de tôle découpés dans la chape et s'étendant latéralement de chaque côté du galet.

De préférence, la protection du galet de blocage est assurée par un étrier fixé sur la chape par soudage, encliquetage, ou rivetage. De manière avantageuse, l'étrier est fixé sur les extrémités d'un arbre monté sur la chape parallèlement à l'axe de rotation de la roue et sur lequel est articulée la partie médiane de la lame à ressort.

D'autres avantages et caractéristiques de l'invention ressortiront à la lecture de la description suivante faite à titre d'exemple et en référence aux dessins annexés dans lesquels :
la figure 1 est une vue en élévation latérale et en coupe verticale partielle d'une roulette munie de moyens de blocage directionnel et de moyens de protection du galet de blocage conforme à l'invention ;
la figure 2 est une vue en élévation latérale de la roulette de la figure 1 ;
la figure 3 est une vue en perspective du mode de réalisation préféré des moyens de protection ;
la figure 4 est une vue en perspective d'une roulette selon une variante de réalisation dans laquelle les moyens de protection sont fixés sur l'axe du galet ;
la figure 5 est une vue en perspective d'une autre variante de réalisation des moyens de protection ; et
la figure 6 est une vue frontale partielle montrant les moyens de blocage de la roulette pivotante.

La roulette 1 représentée sur les dessins comporte une roue 2 qui est susceptible de pouvoir pivoter autour d'un axe vertical de pivotement 3 sensiblement orthogonal à l'axe de rotation horizontal 4 de la roue 2. Les extrémités de l'axe de rotation 4 sont portées par au moins une joue latérale, et de préférence deux joues latérales 5, d'une chape 6 dont la partie supérieure se présente sous la forme d'une jupe 7 montée par l'intermédiaire d'un palier de support 8 sur l'extrémité inférieure de l'axe vertical de pivotement 3.

Dans le présent descriptif, par axe de pivotement il faut entendre toute tige ou platine destinée à fixer la roulette 1 sur un chariot ou autre plate-forme mobile non représenté sur le dessin.

Comme on peut le voir sur les dessins, le palier de support 8 comprend une première cuvette annulaire 9 et une deuxième cuvette annulaire 10 fixée comme la première, rigidement sur l'extrémité inférieure de l'axe de pivotement 3. Les deux cuvettes 9 et 10 sont ouvertes vers le bas. La première cuvette 9 est disposée au-dessus de la deuxième cuvette 10 et présente une jupe extérieure en forme de cloche 9a, à laquelle se raccorde à la partie supérieure, un fond annulaire retourné vers le bas 9b qui, dans la zone d'ouverture intérieure repose sur le fond annulaire 10a de la cuvette inférieure 10. Les deux cuvettes 9, 10 sont fixées sur l'axe de pivotement 3 et sont enserrées par leurs bords intérieurs entre deux épaulements annulaires 3a, 3b de l'axe vertical 3. A son extrémité inférieure, cette cuvette inférieure 10 possède un rebord annulaire 10b qui, par sa face supérieure, sert de piste de roulement à une première série de billes de roulement ou organes analogues 11 sur laquelle prend appui la jupe 7 de la chape de support 6. Dans la zone de jonction annulaire entre la cloche 9a et le fond annulaire 9b, la cuvette supérieure 9 délimite une piste de roulement en forme de gorge 12 dans laquelle est logée une deuxième série de billes de roulement 13 reposant sur la face supérieure de la jupe 7. La cuvette supérieure 9 entoure et recouvre la jupe 7 et la cuvette inférieure 10.

La roulette pivotante 1 comporte également des moyens de blocage 16 de la chape 6 au moins dans une direction prédéterminée par rapport à l'axe de pivotement 3.

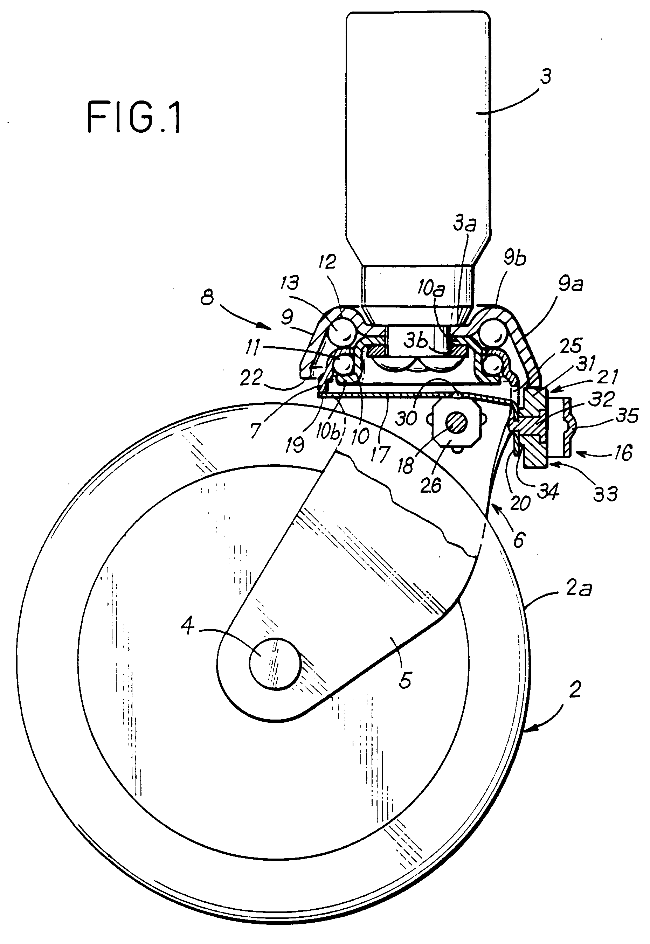

Selon le mode de réalisation représenté sur la figure 1, les moyens de blocage 16 comportent une lame à ressort 17 de forme généralement plane et disposée dans l'espace compris entre le palier de support 8 et la bande de roulement 2a de la roue 2. La lame à ressort 17 est articulée par sa partie médiane sur la chape 6 par l'intermédiaire d'un axe d'articulation 18 sensiblement parallèle à l'axe de rotation 4 de la roue 2. Une première extrémité 19 de la lame à ressort 17 est en appui sur le bord inférieur de la jupe 7 tandis que son autre extrémité 20 comporte un verrou de blocage 21 qui est maintenu en appui sur le bord inférieur libre 22 de la cuvette supérieure 9. Ce bord 22 comporte au moins une dépression 23 adaptée à la forme du verrou de blocage 21 et réalisée sous la forme d'une encoche présentant des rampes 24 latérales inclinées à 45°, afin de permettre le déblocage du pivotement de la roue 2 en exerçant un couple de rotation sur la chape 6 ou l'axe de pivotement 3.

La jupe 7 comporte au voisinage du verrou de blocage 21, une encoche 25 de forme rectangulaire destinée à guider l'extrémité 20 de la lame à ressort 17.

La lame à ressort 17 est montée sur l'axe d'articulation 18 au moyen d'une came prismatique 26 dont les plats comportent au moins un ergot 30 coopérant avec un trou ménagé dans la lame à ressort 17.

Comme on le voit sur la figure 1, l'extrémité 20 de la lame à ressort 17 est cambrée vers le bas. Le verrou de blocage 21 est constitué d'un galet 31 monté à rotation libre sur un axe de galet 32 fixé sur l'extrémité cambrée 20 de la lame à ressort. Le galet 31 comporte un lamage destiné à recevoir la tête de l'axe de galet 32, évitant ainsi toute partie en saillie sur la face arrière 33 du galet 31. Un épaulement 34 sur la face avant du galet 31, situé en regard de l'extrémité 20 de la lame à ressort élimine le contact du galet 31 avec la chape 6. Le galet 31 est disposé dans un plan sensiblement vertical et parallèle à l'extrémité 20 de la lame à ressort. Ainsi la périphérie du galet 31 est en contact précis avec le bord inférieur 22 de la cuvette 9. La référence 35 désigne un dispositif de protection disposé en regard de la face arrière 33 du galet 31 et destiné à protéger le galet 31 contre des chocs latéraux.

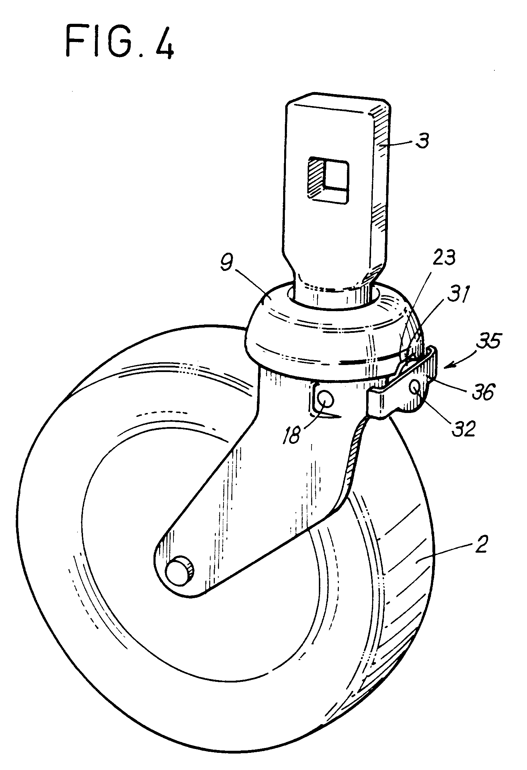

Selon un premier mode de réalisation représenté sur la figure 4, le dispositif de protection 35 est constitué d'un cache 36 fixé sur l'axe de galet 32, ce dernier se prolongeant dans ce cas vers l'arrière.

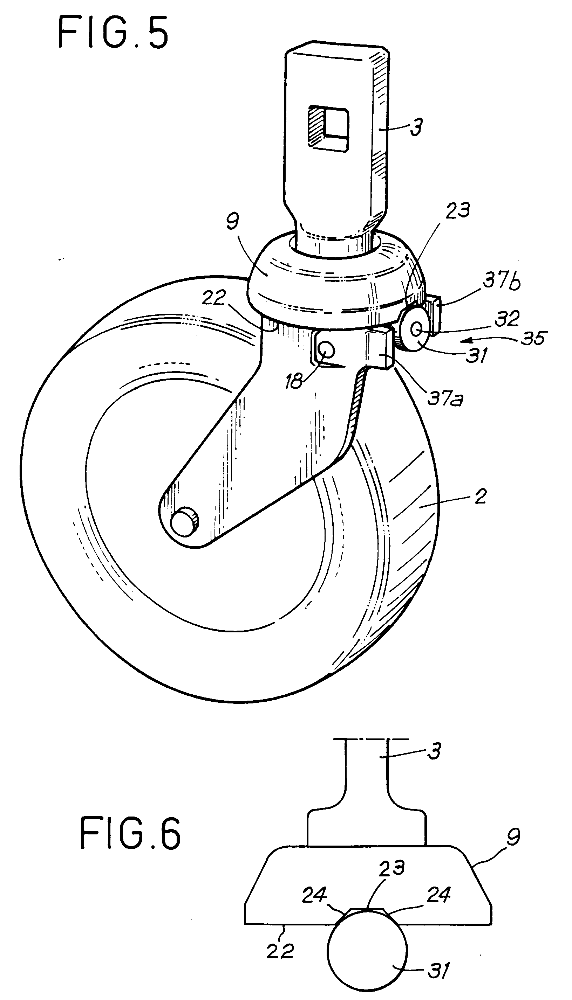

Selon un deuxième mode de réalisation représenté sur la figure 5, le dispositif de protection 35 est constitué par deux rabats de tôle 37a, 37b découpés dans la chape 6 et s'étendant vers l'arrière de chaque côté latéral du galet 31.

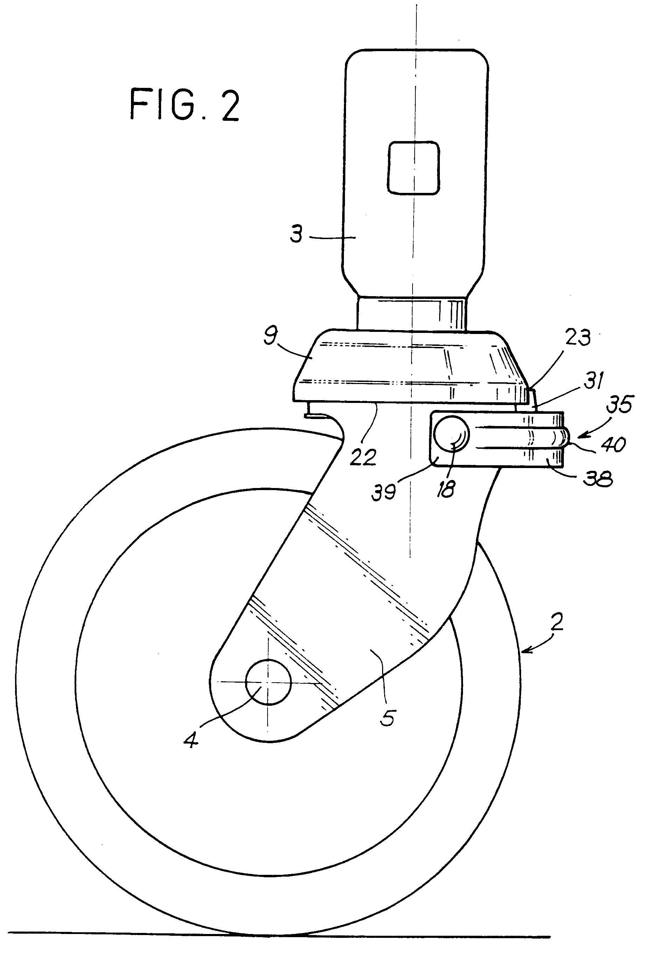

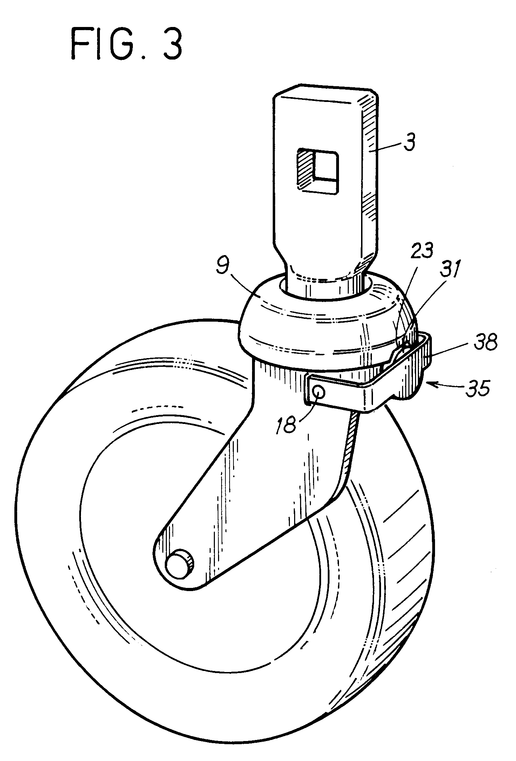

Selon un mode de réalisation préféré représenté sur les figures 2 et 3, le dispositif de protection 35 est assuré par un étrier 38 dont les extrémités 39 sont fixées sur les extrémités de l'axe d'articulation 18 de la lame à ressort 17.

La chape 6 comporte au voisinage de ces extrémités d'axe deux estampages dans lesquels les extrémités 39 de l'étrier 38 sont complètement immobilisées par rapport à la chape 6. L'étrier 38 comporte avantageusement un jonc 40 de renfort participant à sa rigidité.

Le dispositif de protection 35, comme les autres composants de la monture qui participent au pivotement, reçoit un traitement thermochimique spécifique, qui augmente sa résistance mécanique et assure sa tenue à la corrosion. Le traitement thermochimique est effectué de préférence selon la méthode décrite dans le document EP-A-0 077 627.

## Revendications

1. Roulette pivotante à blocage directionnel comportant une roue (2) pivotable autour d'un axe de pivotement (3) vertical sensiblement orthogonal à l'axe de rotation (4) de la roue (2) et décalé par rapport à ce dernier, un palier de support (8) présentant au moins une cuvette annulaire (9) renversée qui, par sa partie centrale, est fixée sur l'extrémité inférieure dudit axe de pivotement (3), une chape de support (6) présentant au moins une joue latérale (5) dont l'extrémité inférieure porte ladite roue (2) et présentant également une jupe (7) disposée autour de l'extrémité inférieure de l'axe de pivotement (3), ladite jupe (7) étant raccordée à l'extrémité supérieure de ladite joue (5) et coopérant avec les organes de roulement (11, 13) dudit palier (8), une lame à ressort (17) disposée dans l'espace compris entre le palier de support (8) et la bande de roulement (2a) de la roue (2) et articulée par sa partie médiane sur la chape (6), ladite lame à ressort (17) comportant une première extrémité (19) en appui sur la jupe (7) et une deuxième extrémité (20) équipée d'un verrou de blocage (21) en appui coulissant sur le bord inférieur (22) de la cuvette (9) et susceptible de s'engager dans une dépression (23) prévue sur ledit bord inférieur (22), caractérisée par le fait que le verrou de blocage (21) comporte un galet (31) monté à rotation libre autour d'un axe de galet (32), par le fait que ledit axe de galet (32) est fixé sur une extrémité cambrée (20) de la lame à ressort (17) et par le fait qu'il est prévu les moyens de protection (35) dudit galet (31) contre les chocs latéraux.

2. Roulette selon la revendication 1, caractérisée par le fait que les moyens de protection (35) comportent un cache (36) fixé à l'extrémité libre de l'axe de galet (32).

3. Roulette selon la revendication 1, caractérisée par le fait que les moyens de protection (35) comportent deux rabats de tôle (37a, 37b) découpés dans la chape (6) et s'étendant latéralement de chaque côté du galet (31).

4. Roulette selon la revendication 1, caractérisée par le fait que les moyens de protection (35) comportent un étrier (38) fixé sur la chape (6).

5. Roulette selon la revendication 4, caractérisée par le fait que la lame à ressort (17) est articulée sur un arbre (18) monté sur la chape (6) et parallèle à l'axe de rotation (4) de la roue (2), et par le fait que l'étrier (38) est fixé sur les extrémités dudit arbre (18).

6. Roulette selon la revendication 5, caractérisée par le fait que la chape (6) comporte au voisinage des extrémités de l'arbre (18) deux estampages destinés à recevoir les extrémités (39) de l'étrier (38).

## Claims

1. Pivoting castor with directional locking comprising a wheel (2) that can be pivoted about a vertical pivotal axis (3) substantially orthogonal to the axis of rotation (4) of the wheel (2) and offset in relation to the latter, a support bearing (8) having at least one inverted annular bowl (9) that is fastened by its central portion to the lower end of said pivotal axis (3), a supporting fork joint (6) having at least one lateral cheek (5), the lower end of which carries said wheel (2) and also having a skirt (7) arranged around the lower end of the pivotal axis (3), said skirt (7) being connected to the upper end of said cheek (5) and co-operating with the bearing members (11, 13) of said bearing (8), a spring blade (17) arranged in the space between the support bearing (8) and the running tread (2a) of the wheel (2) and articulated by its median portion to the fork joint (6), said spring blade (17) comprising a first end (19) bearing against the skirt (7) and a second end (20) fitted with a locking bolt (21) bearing, so as to slide, against the lower edge (22) of the bowl (9) and capable of engaging in a depression (23) made in said lower edge (22), characterised by the fact that the locking bolt (21) comprises a roller (31) mounted so as to rotate freely about a roller spindle (32), by the fact that said roller spindle (32) is fastened to a cambered end (20) of the spring blade (17) and by the fact that means (35) are provided for protecting said roller (31) against lateral impact.

2. Castor according to Claim 1, characterised by the fact that the protection means (35) comprise a cover (36) fastened to the free end of the roller spindle (32).

3. Castor according to Claim 1, characterised by the fact that the protection means (35) comprise two sheet metal flaps (37a, 37b) cut out of the fork joint (6) and extending laterally on either side of the roller (31).

4. Castor according to Claim 1, characterised by the fact that the protection means (35) comprise a stirrup (38) fastened to the fork joint (6).

5. Castor according to Claim 4, characterised by the fact that the spring blade (17) is articulated to a shaft (18) mounted on the fork joint (6) and parallel to the axis of rotation (4) of the wheel (2), and by the fact that the stirrup (38) is fastened to the ends of said shaft (18).

6. Castor according to Claim 5, characterised by the fact that the fork joint (6) comprises, in the vicinity of the ends of the shaft (18), two stamped portions intended to accommodate the ends (39) of the stirrup (38).

## Patentansprüche

1. Lenkrolle mit Richtungsverriegelung mit einem Rad (2), das um eine vertikale Schwenkachse (3) schwenkbar ist, die sich im wesentlichen senkrecht zur Drehachse (4) des Rads (2) erstreckt und gegenüber dieser versetzt ist, mit einem Stützlager (8), das mindestens eine umgestülpte ringförmige Schale (9) aufweist, die mit ihrem Mittelteil am unteren Ende der Schwenkachse (3) befestigt ist, mit einem tragenden Gabelstück (6), das mindestens eine Seitenwange (5) aufweist, deren unteres Ende das Rad (2) trägt, und gleichermaßen eine Ummantelung (7) aufweist, die um das untere Ende der Schwenkachse (3) angeordnet ist, wobei die Ummantelung (7) mit dem oberen Ende der Wange (5) verbunden ist und mit den Wälzkörpern (11, 13) des Lagers (8) zusammenwirkt, mit einer Blattfeder (17), die in dem Raum zwischen dem Stützlager (8) und der Lauffläche (2a) des Rades (2) angeordnet ist und mit ihrem Mittelteil auf dem Gabelstück (6) angelenkt ist, wobei die Blattfeder (17) ein erstes Ende (19) aufweist, das an der Ummantelung (7) abgestützt ist und ein zweites Ende (20), das mit einem Blockierriegel (21) versehen ist, der gleitend am unteren Rand (22) der Schale (9) abgestützt und ausgelegt ist, in eine Vertiefung (23) einzugreifen, die in dem genannten unteren Rand (22) vorgesehen ist, dadurch gekennzeichnet, daß der Blockierriegel (21) eine Reibrolle (31) aufweist, die um eine Reibrollenachse (32) frei drehbar angeordnet ist, daß die Reibrollenachse (32) an einem gewölbten Ende (20) der Blattfeder (17) befestigt ist, und daß eine Schutzeinrichtung (35) für die Reibrolle (31) gegen seitliche Stöße vergesehen sind.

2. Rolle nach Anspruch 1, dadurch gekennzeichnet, daß die Schutzeinrichtung (35) eine Abdeckung (36) umfaßt, die am freien Ende der Reibrollenachse (32) befestigt ist.

3. Rolle nach Anspruch 1, dadurch gekennzeichnet, daß die Schutzeinrichtung (35) zwei Abweiser (37a, 37b) aus Blech aufweist, die in dem Gabelstück (6) ausgeschnitten sind und sich seitlich auf je einer Seite der Reibrolle (31) erstrecken.

4. Rolle nach Anspruch 1, dadurch gekennzeichnet, daß die Schutzeinrichtung (35) einen an dem Gabelstück (6) befestigten Bügel (38) umfaßt.

5. Rolle nach Anspruch 4, dadurch gekennzeichnet, daß die Blattfeder (17) an einer Welle (18) angelenkt ist, die an dem Gabelstück (6) befestigt ist und parallel zur Drehachse des Rades (2) verläuft, und daS der Bügel (38) an den Enden der Welle (18) befestigt ist.

6. Rolle nach Anspruch 5, dadurch gekennzeichnet, daß das Gabelstück (6) in der Nähe der Enden der Welle (18) zwei Stanzungen aufweist, die dazu ausgelegt sind, die Enden (39) des Bügels (38) aufzunehmen.
